# EUROPEAN PATENT APPLICATION

(11) **EP 3 561 548 A1**
(43) Date of publication of application: **30.10.2019**
(21) Application number: 18209459.9
(22) Date of filing: 30.11.2018
(51) Int. Cl.: G01V 1/24, G01V 1/22, G01V 1/16

(54) **MULTICHANNEL STREAMER CABLE**

(30) Priority: 25.04.2018 JP 2018084510
(71) Applicant: Sonic Corporation, Tachikawa-shi, Tokyo 190-0012 (JP); National Institute of Advanced Industrial Science and Technology, Chiyoda-ku, Tokyo 100-8921 (JP)
(72) Inventor: HARAGUCHI, Koshi, Tokyo, 190-0012 (JP); ARAI, Kohsaku, Ibaraki, 305-8567 (JP); INOUE, Takahiko, Ibaraki, 305-8567 (JP)
(74) Representative: MERH-IP Matias Erny Reichl Hoffmann Patentanwälte PartG mbB

(57) **Abstract**

A multichannel streamer cable includes a plurality of vibration receiving units connected in series. The vibration receiving units each include a geophone that receives vibration of a sound wave under water, an amplifier that amplifies a signal output from the geophone, an AD converter that digitizes the signal amplified by the amplifier, and a processing section that performs processing for causing an internal memory to store, as measurement data, a digital signal obtained by digitizing the amplified signal by the AD converter.

## Description

### BACKGROUND OF THE INVENTION

The present invention relates to a multichannel streamer cable.

As a water area underground survey system including a sound source that generates a sound wave under the water, a streamer cable (a towing vibration receiving cable) including a geophone that receives vibration of the sound wave under the water, and an observation ship that tows the sound source and the streamer cable, a water area underground survey system that uses, as the streamer cable, a multichannel streamer cable in which a plurality of geophones are attached to a cable, has been known (e.g., JP-A-2014-137320).

In the conventional multichannel streamer cable, output signals of the geophones are sent to an apparatus on the observation ship through the cable while being kept as analog signals, causing a problem that resistance against noise is low, in particular, an SN ratio of a signal from the geophone disposed on the terminal end side of the cable is excessively deteriorated. Further, in the conventional multichannel streamer cable, a plurality of geophones are incorporated in the cable, and therefore, intervals among the geophones cannot be optionally changed.

### SUMMARY

The invention can provide a multichannel streamer cable having high resistance against noise.

According to an aspect of the invention, there is provided a multichannel streamer cable comprising:
a plurality of vibration receiving units connected in series, each of the vibration receiving units including:
   a geophone that receives vibration of a sound wave under water;
   an amplifier that amplifies a signal output from the geophone;
   an analog-to-digital (AD) converter that digitizes the signal amplified by the amplifier; and
   a processing section that performs processing for causing an internal memory of the processing section to store a digital signal obtained by digitizing the amplified signal by the AD converter, as measurement data.

### BRIEF DESCRIPTION OF THE SEVERAL VIEWS OF THE DRAWING

FIG. 1 is a diagram illustrating an example of the configuration of a sonic survey system including a multichannel streamer cable according to an embodiment of the invention.
FIG. 2 is a block diagram illustrating an example of the configuration of a vibration receiving unit.
FIG. 3 is a block diagram illustrating an example of the configuration of a control unit.

### DETAILED DESCRIPTION OF THE EMBODIMENT

(1) According to an embodiment of the invention, there is provided a multichannel streamer cable comprising:
   a plurality of vibration receiving units connected in series, each of the vibration receiving units including:
      a geophone that receives vibration of a sound wave under water;
      an amplifier that amplifies a signal output from the geophone;
      an analog-to-digital (AD) converter that digitizes the signal amplified by the amplifier; and
      a processing section that performs processing for causing an internal memory of the processing section to store a digital signal obtained by digitizing the amplified signal by the AD converter, as measurement data.

According to the above embodiment, the vibration receiving units individually amplify output signals of a plurality of the geophones, digitize the output signals, and store the output signals on the inside as measurement data. Therefore, it is possible to implement the multichannel streamer cable having high resistance against noise.
(2) The multichannel streamer cable may further include a control unit that performs data communication with the vibration receiving units, the processing section may perform processing for transmitting the measurement data stored in the internal memory to the control unit, and the control unit may include a storage device that stores the measurement data received from the vibration receiving units.
(3) In the multichannel streamer cable, the processing section may change an amplification factor of the amplifier based on a command received from the control unit.

According to the above embodiment, the amplification factor can be set for each vibration receiving unit. Therefore, it is possible to implement the multichannel streamer cable that is user-friendly.
(4) In the multichannel streamer cable, the processing section may perform measurement according to measurement time included in a command received from the control unit.

According to the above embodiment, the measurement time can be set for each vibration receiving unit. Therefore, it is possible to implement the multichannel streamer cable that is user-friendly.
(5) In the multichannel streamer cable, the control unit may include an atomic clock, the time of which is corrected based on time information received from a positioning satellite.

According to the above embodiment, it is possible to accurately manage the measurement time with the atomic clock.
(6) In the multichannel streamer cable, the control unit may filter the measurement data stored in the storage device and transmit the filtered measurement data to an external processing device.

According to the above embodiment, it is possible to remove noise of the measurement data with the digital filter and transmit the measurement data to the external processing device.
(7) The multichannel streamer cable may further include a power supply unit that supplies electric power to the control unit and the vibration receiving units.
(8) The multichannel streamer cable may further include an underwater resistor coupled to a vibration receiving unit that is the rearmost one of the vibration receiving units.

Embodiments of the invention are described below. Note that the embodiments described below do not unduly limit the scope of the invention as stated in the claims. In addition, all of the elements described in the following embodiments should not necessarily be taken as essential requirements of the invention.

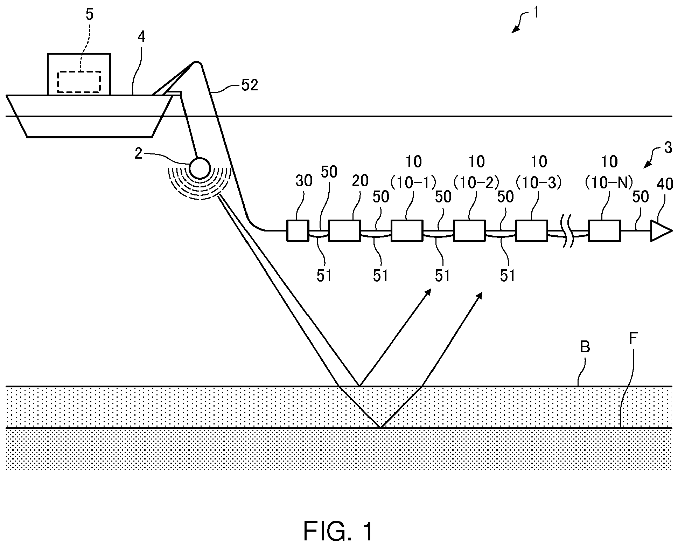

FIG. 1 is a diagram illustrating an example of the configuration of a sonic survey system including a multichannel streamer cable (hereinafter simply referred to as "streamer cable") according to an embodiment of the invention. A sonic survey system 1 includes a sound source 2 that generates a sound wave under the water, a streamer cable 3 including a plurality of geophones (vibration receiving units 10), and an observation ship 4 that tows the sound source 2 and the streamer cable 3. The sound source 2 is an underwater sound source device such as an air gun that uses high-pressure air, a boomer that uses a vibrating plate, or a speaker. The operation of the sound source 2 is controlled by an external processing device 5 mounted on the observation ship 4. The streamer cable 3 is submerged to depth of, for example, several ten meters to several thousand meters under the water. The sonic survey system 1 causes the sound source 2 to generate a sound wave under the water, receives, with the plurality of geophones included in the streamer cable 3, vibration of the sound wave reflected on a seabed B and a stratum boundary surface F under the sea floor, analyzes, with the external processing device 5, measurement data based on output signals of the plurality of geophones, and investigates the shape (undulation) of the sea floor and the shape, the structure, and the like of a stratum under the sea floor.

The streamer cable 3 is configured from a plurality of (N) vibration receiving units 10 (10-1, 10-2, 10-3, ... , and 10-N), a control unit 20, a power supply unit 30, and an underwater resistor 40. The components configuring the streamer cable 3 are connected in series. The streamer cable 3 linearly extends in the horizontal direction in a state in which the streamer cable 3 is submerged. The power supply unit 30 is located at the frontmost stage of the series connection, the control unit 20 is located following the power supply unit 30, the plurality of vibration receiving units 10 are located following the control unit 20, and the underwater resistor 40 is located at the rearmost stage. The power supply unit 30 and the control unit 20, the control unit 20 and the vibration receiving unit 10-1 at the frontmost stage, two vibration receiving units 10 adjacent to each other, and the vibration receiving unit 10-N at the rearmost stage and the underwater resistor 40 are respectively coupled via towing cables 50 (towing ropes). Both ends of the towing cables 50 are attached to the units (the vibration receiving units 10, the control unit 20, and the power supply unit 30) via ring-like attachment members (eye bolts) fixed to the units. The power supply unit 30 and the control unit 20, the control unit 20 and the vibration receiving unit 10-1, and the two vibration receiving units 10 adjacent to each other are respectively electrically connected via power supply/communication cables 51. Both ends of the power supply/communication cables 51 are connected to connectors included in the units (the vibration receiving units 10, the control unit 20, and the power supply unit 30). The power supply unit 30 is connected to the observation ship 4 via a towing cable 52 incorporating a communication cable.

The vibration receiving units 10 respectively include geophones and respectively function as single-channel streamer cables. The control unit 20 performs data communication with the plurality of vibration receiving units 10 via the power supply/communication cables 51 and performs data communication with the external processing device 5 via the power supply/communication cable 51 and the towing cable 52 (the communication cable). The power supply unit 30 (a battery box) includes a battery (a secondary battery) and supplies electric power to the control unit 20 and the plurality of vibration receiving units 10 via the power supply/communication cables 51. The underwater resistor 40 is, for example, a conical underwater parachute. By providing the underwater resistor 40 at the rearmost stage of the streamer cable 3, it is possible to tow the streamer cable 3 in a substantially linearly extending state.

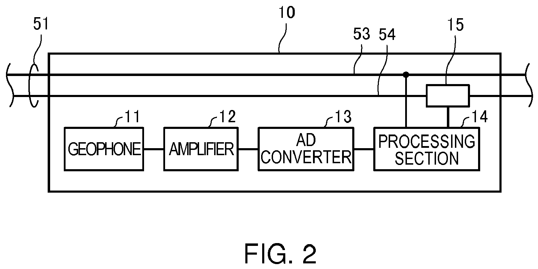

FIG. 2 is a block diagram illustrating an example of the configuration of the vibration receiving unit 10. The vibration receiving unit 10 includes a geophone 11 that receives vibration of a sound wave under the water, an amplifier 12 (a preamplifier) that amplifies an output signal of the geophone 11, an analog-to-digital (AD) converter 13 that converts (digitizes) a signal (an analog signal) amplified by the amplifier 12 into a digital signal, a processing section 14, and a switching hub 15. The geophone 11 is configured by one or a plurality of hydrophones (underwater microphones). Electric power is supplied to the components of the vibration receiving unit 10 via a power supply cable 53 incorporated in the power supply/communication cable 51. The processing section 14 is connected to a communication cable 54 (a wired LAN) incorporated in the power supply/communication cable 51 via the switching hub 15.

The processing section 14 is a computer including a CPU (a processor), memories (a RAM and a ROM), and a communication module. The processing section 14 performs processing for causing the internal memory (the RAM) to store the digital signal resulting from the conversion by the AD converter 13 as measurement data and transmitting the measurement data stored in the internal memory to the control unit 20 via the wired LAN. The processing section 14 acquires the measurement data according to measurement time (measurement start time, measurement end time, a measurement interval, and the like) included in a command (a measurement data acquisition command) received from the control unit 20 via the wired LAN (causes the geophone 11, the amplifier 12, and the AD converter 13 to operate and causes the internal memory to store the digital signal from the AD converter 13 as the measurement data). The processing section 14 transmits the measurement data stored in the internal memory to the control unit 20 on the basis of a command (a measurement data transmission command) received from the control unit 20. The processing section 14 changes the amplification factor of the amplifier 12 in a range of, for example, 0 to 100 on the basis of a command (an amplification factor change command) received from the control unit 20.

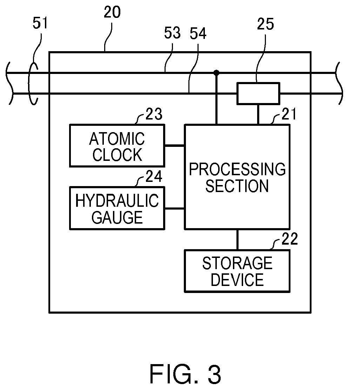

FIG. 3 is a block diagram illustrating an example of the configuration of the control unit 20. The control unit 20 includes a processing section 21, a storage device 22 (a nonvolatile semiconductor memory such as a SSD), an atomic clock 23, a hydraulic gauge 24, and a switching hub 25. Electric power is supplied to the components of the control unit 20 via the power supply cable 53. The processing section 21 is connected to the communication cable 54 (the wired LAN) via the switching hub 25.

Time information of the atomic clock 23 is supplied to the processing section 21. The processing section 21 operates on the basis of the time information of the atomic clock 23. The processing section 21 transmits the time information of the atomic clock 23 to the vibration receiving units 10 and synchronizes time information of clocking sections (clocks) included in the vibration receiving units 10 with the time information of the atomic clock 23. Time of the atomic clock 23 is corrected on the basis of time information (time synchronizing with the UTC) received from a positioning satellite (a GNSS satellite such as a GPS satellite). A connector, to which a GNSS receiver such as a GPS receiver is connectable from the outside, is provided in the control unit 20. Before the control unit 20 is submerged, the GNSS receiver is connected to the control unit 20, time information is acquired via the GNSS receiver, and the time of the atomic clock 23 is corrected on the basis of the acquired time information. The external processing device 5 is also operating on the basis of time information of an atomic clock (an atomic clock, the time of which is corrected on the basis of the time information received from the positioning satellite) mounted on the observation ship 4. The time information of the external processing device 5 and the time information of the control unit 20 (the processing section 21) accurately synchronize with each other.

An output signal of the hydraulic gauge 24 is supplied to the processing section 21. The processing section 21 calculates a water depth (a water depth to which the streamer cable 3 is submerged) on the basis of the output signal of the hydraulic gauge 24.

The processing section 21 is a computer including a CPU (a processor), memories (a RAM and a ROM), and a communication module. Addresses (IP addresses) are respectively given to the control unit 20, the vibration receiving units 10, and the external processing device 5. The processing section 21 performs transmission and reception of data with the vibration receiving units 10 and the external processing device 5 via the wired LAN using the addresses.

The processing section 21 generates, for each vibration receiving unit 10, a command (a measurement data acquisition command) for causing the vibration receiving units 10 to perform measurement (acquisition of measurement data) and transmits the generated command to the vibration receiving units 10. The measurement data acquisition command includes information concerning measurement time (measurement start time, measurement end time, and a measurement interval). The processing section 21 sets the measurement time of the vibration receiving units 10 on the basis of a vibration time of the sound source 2 (time and a time interval of vibration of the sound source 2 by the external processing device 5) stored in the storage device 22, a water depth calculated on the basis of the output signal of the hydraulic gauge 24, the positions (disposition) of the vibration receiving units 10 and transmits the measurement data acquisition command to the vibration receiving units 10 to cause the vibration receiving units 10 to acquire measurement data of a sound wave generated from the sound source 2 and reflected on the seabed B and the stratum boundary surface F.

The processing section 21 generates, for each vibration receiving unit 10, a command (a measurement data transmission command) for causing the vibration receiving units 10 to transmit measurement data and transmits the generated command to the vibration receiving units 10. The processing section 21 causes the storage device 22 to store, in association with the vibration receiving units 10 at transmission sources, measurement time, a water depth, and the like, measurement data transmitted from the vibration receiving units 10 according to the measurement data transmission command. The processing section 21 transmits the measurement data (the measurement data associated with the vibration receiving units 10, the measurement time, the water depth, and the like) stored in the storage device 22 to the external processing device 5 at predetermined timing (periodical timing after a measurement end or timing when a command is received from the external processing device 5). The external processing device 5 performs analysis processing on the basis of the measurement data received from the control unit 20 and creates a strata map or the like under the sea floor.

The processing section 21 may filter the measurement data stored in the storage device 22 with a digital filter (e.g., an FIR filter or an IIR filter) such as a band-pass filter and transmit the filtered measurement data to the external processing device 5. By filtering the measurement data, it is possible to remove, from the measurement data, noise due to screw sound and the like of the observation ship 4. The processing section 21 may select measurement data to be filtered among the measurement data stored in the storage device 22 and filter only a selected part of the measurement data. For example, the processing section 21 may filter measurement data received from the vibration receiving unit 10 located near the observation ship 4 and then transmit the measurement data to the external processing device 5. The processing section 21 may transmit measurement data received from the vibration receiving unit 10 in a position away from the observation ship 4, to the external processing device 5 while keeping the measurement data as raw data without filtering the measurement data.

The processing section 21 generates, for each vibration receiving unit 10, a command (an amplification factor change command) for causing the vibration receiving units 10 to change (set) an amplification factor and transmits the generated command to the vibration receiving units 10. For example, a table that stores an amplification factor for each vibration receiving unit 10 is stored in the storage device 22. The processing section 21 refers to the table and generates the amplification factor change command transmitted to the vibration receiving units 10.

As explained above, in the streamer cable 3 in this embodiment, the vibration receiving units 10 individually amplify and digitize output signals of a plurality of geophones 11 and store the output signals as measurement data on the inside. Therefore, an SN ratio is not deteriorated because of propagation of the output signals (analog signals) of the geophones 11 in a long distance. The output signals are not affected by noise due to connectors and power supply noise. It is possible to realize a multichannel streamer cable having high resistance against noise. In the streamer cable 3, intervals among the geophones 11 can be optionally independently changed simply by changing the length of the cables (the towing cables 50 and the power supply/communication cables 51) that connect the vibration receiving units 10. The intervals among the geophones 11 can be easily changed according to, for example, ship speed of the observation ship 4. The number of geophones (the number of channels) of the streamer cable can be easily changed simply by changing the number of the vibration receiving units 10 connected in series. In the streamer cable 3, an amplification factor and measurement time can be individually set for each vibration receiving unit 10. Therefore, it is possible to realize a multichannel streamer cable that is user-friendly. In the streamer cable 3, the control unit 20 includes the atomic clock 23, the time of which is corrected on the basis of time information received from a positioning satellite. Therefore, it is possible to accurately manage measurement time.

The embodiments or the modifications of the invention are described above, but the invention is not limited to the embodiment or the modifications and can be implemented in various ways without departing from the spirit of the invention.

The invention includes configurations that are substantially the same as the configurations described in the embodiments (for example, a configuration having the same function, method and result or a configuration having the same objective and effect). The invention also includes configurations in which non-essential elements described in the embodiments have been replaced by other elements. The invention further includes configurations having the same effects as those of the configurations described in the embodiments, or configurations capable of achieving the same objectives as those of the configurations described in the embodiments. Moreover, the invention includes configurations in which known techniques are added to the configurations described in the embodiments.

Some embodiments of the invention have been described in detail above, but a person skilled in the art will readily appreciate that various modifications can be made from the embodiments without materially departing from the novel teachings and effects of the invention. Accordingly, all such modifications are assumed to be included in the scope of the invention.

## Claims

1. A multichannel streamer cable comprising:
a plurality of vibration receiving units connected in series, each of the vibration receiving units including:
a geophone that receives vibration of a sound wave under water;
an amplifier that amplifies a signal output from the geophone;
an analog-to-digital (AD) converter that digitizes the signal amplified by the amplifier; and
a processing section that performs processing for causing an internal memory of the processing section to store a digital signal obtained by digitizing the amplified signal by the AD converter, as measurement data.

2. The multichannel streamer cable according to claim 1, further comprising:
a control unit that performs data communication with the vibration receiving units, wherein
the processing section performs processing for transmitting the measurement data stored in the internal memory to the control unit, and
the control unit includes a storage device that stores the measurement data received from the vibration receiving units.

3. The multichannel streamer cable according to claim 2, wherein the processing section changes an amplification factor of the amplifier based on a command received from the control unit.

4. The multichannel streamer cable according to claim 2 or 3, wherein the processing section performs measurement according to measurement time included in a

5. The multichannel streamer cable according to any one of claims 2 to 4, wherein the control unit includes an atomic clock, the time of which is corrected based on time information received from a positioning satellite.

6. The multichannel streamer cable according to any one of claims 2 to 5, wherein the control unit filters the measurement data stored in the storage device and transmits the filtered measurement data to an external processing device.

7. The multichannel streamer cable according to any one of claims 2 to 6, further comprising:
a power supply unit that supplies electric power to the control unit and the vibration receiving units.

8. The multichannel streamer cable according to any one of claims 1 to 7, further comprising:
an underwater resistor coupled to a vibration receiving unit that is the rearmost one of the vibration receiving units.
